Europäisches Patentamt

European Patent Office

Office européen des brevets

(11) Publication number: **0 544 241 A1**

# EUROPEAN PATENT APPLICATION

(21) Application number: **92120035.8**

(22) Date of filing: **25.11.92**

(51) Int. Cl.⁵: **B64G 1/24**, G05D 1/08

(30) Priority: **27.11.91 US 800661**

(43) Date of publication of application:
**02.06.93 Bulletin 93/22**

(84) Designated Contracting States:
**DE FR GB IT**

(71) Applicant: **Hughes Aircraft Company**
**7200 Hughes Terrace P.O. Box 45066**
**Los Angeles, California 90045-0066(US)**

(72) Inventor: **Bender, Douglas J.**
**718 Garnet Street**
**Redondo Beach, CA(US)**

(74) Representative: **Witte, Alexander, Dr.-Ing. et al**
**Witte, Weller, Gahlert & Otten Patentanwälte**
**Augustenstrasse 14**
**W-7000 Stuttgart 1 (DE)**

(54) Method and apparatus for dynamic precompensation of solar wing stepping motions of a satellite.

(57) An apparatus for compensating for disturbances $(T_N^w, T_S^w)$ on an orbiting satellite is associated with the satellite and comprises actuation means (46) for actuating the satellite in at least one predetermined satellite axis in response to particular satellite attitude compensation control signals $(T_P^C)$. Control means (44) provide the compensation control signals $(T_P^C)$ to the actuation means (46) in the at least one predetermined axis, the control means (44) receiving satellite attitude measurement signals $(\theta_P^m)$ from a sensor (52). Further provided is a solar wing compensation device (50) for computing an estimated solar wing disturbance signal $(\alpha^C_{WN}\hat{I}_{WN}; \alpha^C_{WS}\hat{I}_{WS})$ in the at least one axis and applying a solar wing control signal $(\alpha^C_{WN}\hat{I}_{WN}; \alpha^C_{WS}\hat{I}_{WS})$ to the actuation means (46) in order to compensate for the disturbance $(T_N^w, T_S^w)$ placed on the satellite from actuation of at least one solar wing associated with the satellite.

Fig-2

## BACKGROUND OF THE INVENTION

### 1. Technical Field

This invention relates generally to a method for compensating for dynamic disturbances in a satellite, and more particularly, to a method of computing and compensating for dynamic disturbances which are induced on an orbiting satellite by solar wing slewing.

### 2. Discussion

A geosynchronous earth orbit, as is known in the art, is the orbit about the earth in which a satellite or spacecraft will remain fixed above a specific location on the earth. This orbit is at a distance of approximately 22,400 miles above the earth. In this orbit, a beam, such as a communications beam, from the satellite can be maintained over a desirable area on the earth, such as a particular country, thus establishing an area which will receive the beam. To remain in a geosynchronous orbit it is necessary that the satellite be in an orbit substantially within the equatorial plane of the earth at the desirable distance, and that the satellite's attitude be oriented perpendicular to this plane. Any deviation or disturbance which causes the satellite to direct its antenna away from a boresight location on the earth tends to effect the coverage area of the beam, and thus, produces undesirable results. Many different forces are in effect on the satellite which tend to alter the satellite's antenna pointing direction.

As a first order method for countering the effects of the different forces acting on the satellite, it is known to stabilize the satellite's attitude by providing an angular bias momentum which resists changes in the satellite's orientation due to external forces transverse to the bias momentum axis. Satellites using this technique are generally referred to as "momentum bias" satellites. Angular momentum bias is usually provided by a number of momentum or reaction wheels which spin at least part of the satellite. The bias axis set by the spin of the momentum wheels is generally perpendicular to the direction of the orbit of the satellite. Although the bias momentum resists changes in the satellite's orientation in directions transverse to the bias momentum axis, it is still necessary to provide control for correcting variations in the satellite's orientation along the bias axis. Different methods of controlling the satellite's attitude, such as feedback loops, are known in the art.

For most bias momentum satellites, the satellite payload, i.e., the part of the satellite carrying at least the antenna, is oriented differently than the momentum wheel. It is therefore necessary to provide means for correcting the orientation of the payload with respect to the orientation of the momentum attitude. Typically, the satellite's payload is defined in three axes referred to as the yaw, roll and pitch axes. If the satellite is in a geosynchronous orbit, the yaw axis is generally directed from the satellite to the center of the earth, the pitch axis is generally directed normal to the plane of the orbit of the satellite and the roll axis is generally perpendicular to the yaw and pitch axes, in a direction of travel of the satellite as is well known in the art.

One of the above mentioned disturbances on a satellite's pointing is the result of slewing a satellite solar wing. Slewing a satellite solar wing is done to track the sun as the satellite orbits the earth in order to realize maximum efficiency of the solar cells on the solar wing, i.e., maintain the plane of the solar cells perpendicular to the direction of the rays from the sun. When the solar wings are slewed, a disturbance torque equal to the solar wing inertia times the wing angular acceleration rate is applied to the satellite's main body from this motion. More particularly, the slewing motion of the solar wing consists of a sudden step change in the wing rate such that a momentum equal to the wing's inertia times the wing rate is imparted to the satellite's main body to which the payload is attached. The satellite payload reacts by beginning to rotate in the opposite direction to the torque of the disturbance. The satellite's attitude control system would, through closed-loop action, eventually act to null the satellite's payload movement and return it to its desirable pointing direction. However, the control system generally has a low bandwidth and does not respond very quickly to these types of disturbances. Consequently, there is a non-negligible attitude transient factor which affects the direction of the satellite pointing.

One prior art system for correcting spacecraft dynamics is disclosed in U.S. Patent No. 4,687,161 issued August 18, 1987 to Plescia et al. In that patent, a dynamic precompensation feed forward system for reducing spacecraft pointing errors caused by the motion of instruments on the spacecraft is disclosed. The system includes compensating means for deriving compensating errors as a result of the motion of the instruments induced on the spacecraft. The instruments specifically compensated for are mirrors on the satellite which are adjustably pointed towards the earth. This patent does not, however, disclose a feed forward system for dynamically precompensating for solar wing motions.

A second patent, U.S. Patent No. 4,732,354, issued March 22, 1988 to Lievre discloses a system for controlling nutation of a 3-axis stabilized satellite. Specifically, this patent discloses compensating for the nutation caused by the movement of the solar wings associated with the satellite. This compensation is accomplished by controlling the rotational speed of the solar wing selectively and temporarily to modify the rotational speed of the wing with respect to a precomputed average value to reduce the amplitude of the nutation. This patent does not disclose a feed forward system for dynamically precompensating for solar wing motions.

What is needed then is a method of computing for the disturbance torque applied to the satellite's payload by slewing of the solar wings, and adding an equal and opposite command to the satellite's control torque to compensate for this disturbance. It is therefore an object of the present invention to provide such a method.

SUMMARY OF THE INVENTION

Disclosed is a method for determining the torque applied to an orbiting satellite's payload by rotation of the solar wings about their axes, and consequently developing an equal and opposite torque to eliminate transients due to this motion. In particular, by knowing the solar wing inertia about the axis of wing rotation and the wing acceleration about this axis, the disturbance torque which will be applied to the satellite's central body can be calculated. A compensation torque equal and opposite to this disturbance is then added to the feedback control torque applied by the satellite's attitude control system and the sum of these torques is applied to the satellite's control actuator in that axis. If there are two or more solar wings, then the disturbance torques due to all of the wings are added up and added to the control torque.

In an alternate implementation, the attitude control system is sampled-data in nature; this is, the control torque is computed at discrete instances in time and held at the most recent computed value between those instances. In this case, instead of the disturbance torque, the change in angular momentum since the previous sample instant will be fed forward. This will cause the satellite control actuator to add a change in angular momentum to the satellite body which is equal and opposite to that applied by the solar wing.

Additional objects, advantages, and features of the present invention will become apparent from the following description and appended claims, taken in conjunction with the accompanying drawings.

BRIEF DESCRIPTION OF THE DRAWINGS

FIG. 1 is a diagram of a momentum bias satellite orbiting the earth which may incorporate compensation for the effects of solar wing slewing according to a preferred embodiment of the present invention.

FIG. 2 is a block diagram schematic showing a solar wing precompensation system according to one preferred embodiment of the present invention; and

FIG. 3 is a schematic block diagram showing a solar wing precompensation logic according to a second preferred embodiment of the present invention.

DETAILED DESCRIPTION OF THE PREFERRED EMBODIMENT

The following description of the preferred embodiments addressing compensation for the effects on a satellite body caused by slewing of solar wings is merely exemplary in nature and is in no way intended to limit the invention or its application or uses.

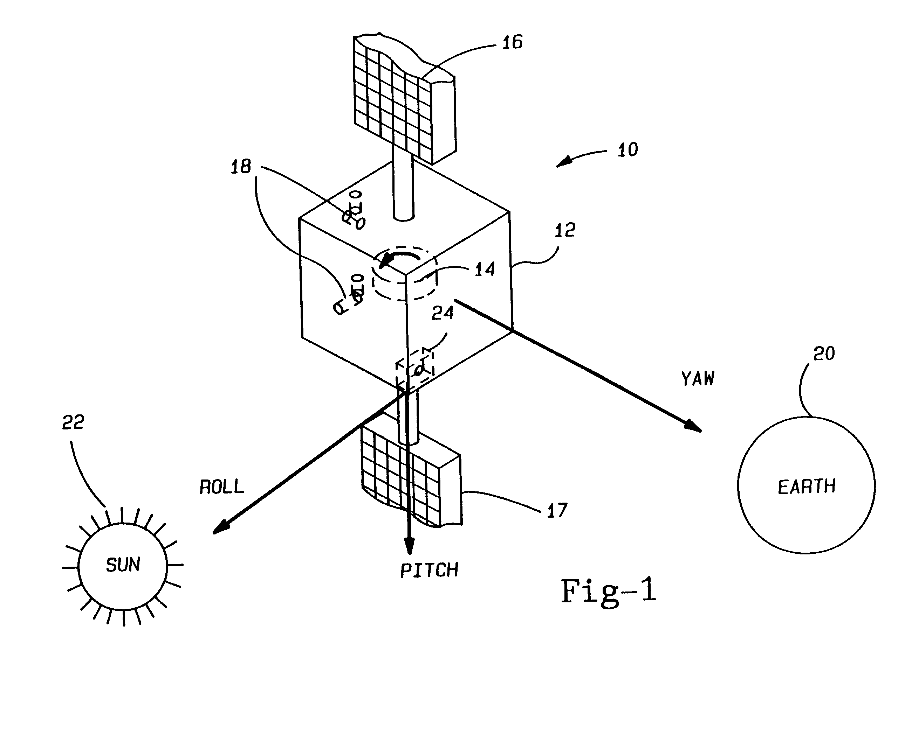

Before going on to the specifics of the invention, it may be helpful to get an overview of the type of satellite which may incorporate the invention. To get this understanding, first turn to FIG. 1. In FIG. 1, the relationship of a momentum bias satellite 10 orbiting the earth 20 and relative to the sun 22 is shown. Satellite 10 includes a satellite central body 12, here depicted as a cube. By representing body 12 of satellite 10 as a cube it is easier to visualize the coordinates of the satellite's axes of yaw, roll and pitch. As discussed above, the yaw axis is the axis directed from the attitude of the satellite body 12 to the center of the earth 20, the pitch axis is directed normal to the orbit of satellite 10 and normal to the yaw axis, and the roll axis is perpendicular to the yaw and pitch axes, in a direction along travel of satellite 10. Each of these axes are shown in a directional manner in FIG. 1.

Satellite 10 includes a momentum wheel 14 which spins in a particular direction, here clockwise as shown, in order to stabilize satellite 10 in its orbit. The axis of rotation of momentum wheel 14 is generally parallel to the pitch axis of the satellite's body 12. The momentum wheel 14 is typically oriented separate from the reference of the satellite body 12. In one example, the orientation of the momentum wheel 14 will be on a 2-axis gimbal. The momentum wheel 14, in this example, is an actuator which adjusts and maintains the satellite's attitude. The pitch axis and momentum axis would be oriented substantially perpendicular to the equatorial plane of the earth 20 if satellite 10 were in a geosynchronous orbit.

Satellite 10 further includes an array of integrating gyros 18 and a thermopile earth sensor 24. Integrating gyros are generally used to orient the satellite 10 in a desirable configuration when the satellite 10 reaches its geosynchronous altitude as is known in the art. In normal operation of satellite 10, integrating gyros 18 would not be used. Earth sensor 24, sometimes referred to as a horizon sensor, senses the horizon of the earth in order to establish an inertial reference frame for the proper orientation of the satellite 10. An earth sensor will typically measure the satellite's orientation in the roll and pitch directions. Other types of sensors, including but not limited to star sensors, sun sensors, gyros and ground sensors, could also provide the necessary sensing of the satellite's attitude. Projecting from satellite body 12 are dual solar wings 16 and 17 shown here in a cut-away format. Solar wings 16 and 17 are directed perpendicular to the rays of the sun in order to provide the necessary power to the systems on satellite 10.

As discussed above, the solar wings of an orbiting satellite are slewed in order to follow the movement of the sun relative to the satellite 10. During this slewing action, the satellite 10 will receive a disturbance torque in the opposite direction of the slewing of the wings 16 and 17, thus, altering the pointing direction of the satellite 10. By computing the disturbance torque applied to the satellite's body 12, and adding an equal and opposite torque to the body 12 by means of an actuator, the net disturbance from the slewing motion is zero and thus the attitude transients due to the solar wing slewing is negated. If the acceleration of a solar wing about its axis is $\alpha_w$ and the solar wings inertia about its axis of rotation is $I_w$, then a disturbance torque of $I_w\alpha_w$ is applied by the satellite's body in the opposite direction of the torque being applied to the wing. Consequently, a torque of $-I_w\alpha_w$ can then be added to the control torque applied to the satellite attitude control system to eliminate this transient torque from the solar wing motion. In particular satellite designs, the solar wing axis of rotation coincides with the momentum wheel rotational axis, wheel 14 of satellite 10, and also the satellite's pitch axis. Consequently, only a disturbance torque in the pitch axis direction of the satellite is generally exhibited in these types of designs.

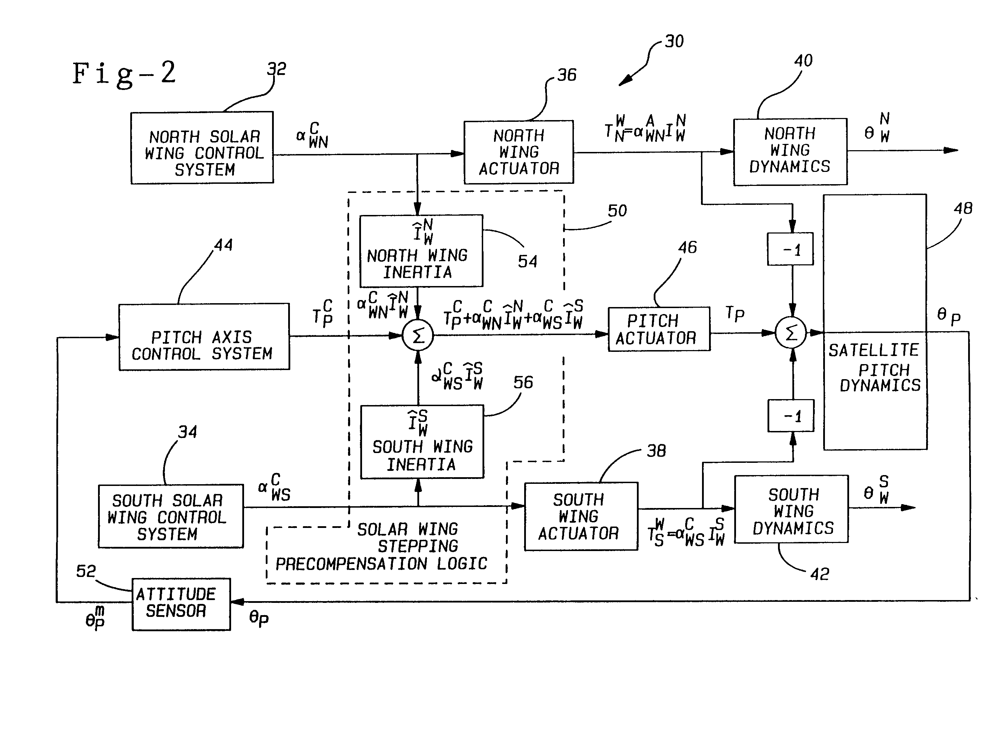

Turning to FIG. 2, an implementation of a solar wing stepping motion compensation system 30 is shown in a block diagram form. More particularly, compensation system 30 is shown including a north wing control system 32, a south wing control system 34, a north wing actuator 36, a south wing actuator 38, north wing dynamics 40, south wing dynamics 42, a satellite pitch axis control system 44, a pitch axis actuator 46, satellite dynamics 48, a solar wing stepping precompensation device 50 and an attitude sensor 52. The north solar wing control system 32 includes an algorithm, known to those skilled in the art, which is precomputed to apply a signal to the north wing actuator 36 in order to actuate the north wing dynamics 40 such that the north wing dynamics 40 tracks the sun to provide maximum solar efficiency. More particularly, the north solar wing control system 32 imparts an acceleration signal $\alpha_{WN}{}^C$ to the north wing actuator 36 which applies the proper torque $T_N{}^W$ to the north wing dynamics 40 to rotate it in a desirable manner to track the sun. The torque $T_N{}^W$ is the acceleration control signal $\alpha_{WN}{}^C$ times the inertia $I_W{}^N$ of the wing. The inertia $I_W{}^N$ of the wing is related to its mass, as is well known in the art. The accleration $\alpha_W{}^A$ from the north wing actuator 36 is the actual acceleration imparted to the wing. The output signal $\theta_W{}^N$ from the north wing dynamics 40 is the angle position of the wing relative to its rotational axis.

The south wing system operates in exactly the same fashion. More particularly, the south solar wing control system 34 imparts an acceleration signal $\alpha^C{}_{WS}$ to the south wing actuator 38 which in turn applies a torque $T_S{}^W$ equal to the actual acceleration $\alpha^A{}_{WS}$ times the inertia of the south wing $I^S{}_W$ to the south wing dynamics 42. The output of the south wing dynamics $\theta_W{}^S$ is the angular position of the south wing relative to its rotational axis. As shown by the -1 boxes associated with the satellite dynamics 48, $T^W{}_N$ and $T^W{}_S$ apply an opposite force to the satellite dynamics 48.

The satellite dynamics 48 represents the satellite itself. The satellite's pitch axis has a certain angle relative to the equatorial plane of the earth. This angle $\theta_P$ is measured by an attitude sensor 52 to determine if it is in proper orientation. Attitude sensor 52 can be any applicable sensor such as a ground beacon sensor, earth sensor, sun sensor, star sensor, etc. The measured angle $\theta_P{}^N$ from the attitude sensor 52 is applied to a satellite pitch axis control system 44 which determines if the angle $\theta_P$ is at its correct orientation for proper satellite pointing. If it is not, then pitch axis control system 44 imparts a control torque signal $T_P{}^C$ to a pitch actuator 46 which applies an actual torque $T_P$ to the satellite dynamics 48. Pitch actuator 46 can be any appropriate actuation device such as a momentum or reaction wheel, thrusters or control moment gyros. Consequently, the pitch axis attitude is controlled by a closed loop system.

As discussed above, the control system for monitoring the pitch angle has a low bandwidth, i.e., it is very slow in compensating for certain attitude adjustments. Therefore, as the wings are slewed, the compensation for the torque applied to the satellite dynamics is not corrected for in an acceptable amount of time. To compensate for this disturbance torque more quickly, a solar wing stepping precompensation logic circuit 50 is incorporated. Solar wing stepping precompensation logic circuit 50 includes a north solar wing inertia model circuit 54 and a south solar wing inertia model circuit 56. North solar wing circuit 54 and south solar wing 56 include models of estimated inertias $\hat{I}^N_w$ and $\hat{I}^S_w$ for the north and south wing, respectively. The control acceleration signal $\alpha^C_{WN}$ from the north solar wing control system 32 is applied to the north wing inertia circuit 54 and the control signal $\alpha^C_{WS}$ from the south solar wing control system 34 is applied to the south wing inertia circuit 56. From this, the predicted acceleration torque to the satellite dynamics 48 can be calculated as the multiplication of $\alpha^C_{WN}\hat{I}^W_N$ for the north wing and the multiplication of $\alpha^C_{WS}\hat{I}^S_W$ for the south wing, and added to the control signal $T_P^C$ from the pitch axis control system 44 in order to provide the added compensation to correct for the disturbance caused by the stepping motion of the wings. Consequently, a value of the addition of these factors, i.e., $T_P^C + \alpha^C_{WN}\hat{I}_w^N + \alpha^C_{WS}\hat{I}^S_W$ is applied to pitch actuator 46, as shown. The added estimated acceleration torques to the control torque $T_P^C$ is substantially equal and opposite to the actual torque applied to the satellite from the slewing motion of the wings.

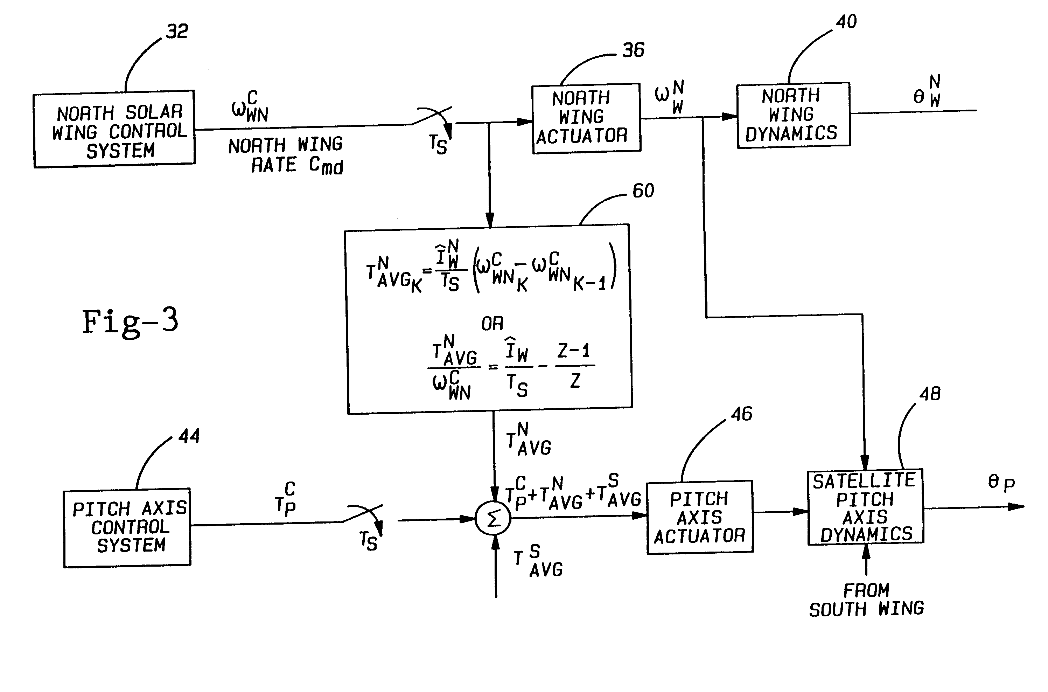

FIG. 3 shows an alternate implementation for compensation of the slewing motion of the wings in which the attitude control system is sample-data in nature. In other words, in this type of system, the control torque is computed at discrete instances in time and the control value is held to the most recent computed value between the discrete time intervals. In the example of FIG. 3, a sampling device, shown here as $T_S$, is included at the output of the north solar wing control system 32, the pitch axis control system 44 and the south solar wing control system 34, although the south solar wing control system is not shown in FIG. 3. The sampling device $T_S$ closes every predetermined time interval in order to apply the control signal to the north and south wing dynamics in the same manner as discussed above, as well as control of the attitude of the pitch axis of the satellite. To get the appropriate acceleration on the wing, it is necessary to compute the wing commands at consecutive intervals. A logic device 60 takes the north wing control command $\omega_{WN}^C$ at consecutive intervals and computes an average torque $T^N_{avg.}$ for the time between these intervals to be applied to the pitch axis actuator 46 along with the control signal $T_P^C$ from the pitch axis control system 44. To compute $T^N_{avg.}$, the following equation is used:

$$T^N_{avg.} = \hat{I}^N_W/T_S(\omega^C_{WN(K)} - \omega^C_{WN(K-1)})$$

where K represents the k'th time sample, and K-1 is the previous interval of K. A logic circuit to compute the estimated torque on the satellite by the slewing of the south wing would also be included.

The discussion above has been limited to the ideal case where the solar wings are perfectly aligned and flat and thus the only disturbance to the satellite from solar wing slewing would be along the slewing axis. The slewing axis would be parallel to the satellite pitch axis. However, in practice solar wings are typically not perfectly aligned and have some product of inertia with respect to their rotation axis. This, then causes disturbance torques about the satellite's body axis transverse to the wing rotation axis when the wings are slewed. If the satellite has actuation capabilities in these axes, and the solar wing product of inertia is known, these disturbances can also be compensated by feeding forward the disturbance torque or the change in angular momentum to the control actuators. It is therefore possible to use the following equations to calculate the disturbance torques applied to the roll and yaw axes of the satellite in the case where the disturbance is not contained within the pitch axis of the satellite.

$$T_r = I_{rp} \alpha_W$$
$$T_y = I_{yp} \alpha_W$$

where $T_r$ and $T_y$ are the roll and yaw disturbance torques applied to the satellite, respectively, $I_{rp}$ is the solar wing product of inertia between the roll and pitch axes in the satellite coordinate system, $I_{yp}$ is the solar wing product of inertia between the yaw and pitch axes in the satellite coordinate system and $\alpha_W$ is the solar wing acceleration rate. Equal and opposite torques would then be entered to the satellite roll and yaw control torques. Sample data control systems could be combined as above by using the change of solar wing rate instead of the acceleration.

The foregoing discussion discloses and describes merely exemplary embodiments of the present invention. One skilled in the art will readily recognize from such discussion, and for the accompanying drawings and claims, that various changes, modifications and variations can be made therein without departing from the spirit and scope of the invention as defined in the following claims.

## Claims

1. An apparatus for compensating for disturbances ($T_N^w$, $T_S^w$) on an orbiting satellite (10), said apparatus being associated with said satellite (10), said apparatus comprising:

actuation means (46) for actuating the satellite (10) in at least one predetermined satellite axis in response to particular satellite attitude compensation control signals ($T_P^C$);

control means (44) for providing the compensation control signals ($T_P^C$) to the actuation

means (46) in the at least one predetermined axis, said control means (44) receiving satellite attitude measurement signals $(\Theta_P{}^m)$ from a sensor (52); and

a solar wing compensation device (50), said solar wing compensation device (50) computing an estimated solar wing disturbance signal $(\alpha^C{}_{WN}\hat{I}_{WN}; \alpha^C{}_{WS}\hat{I}_{WS})$ in the at least one axis and applying a solar wing control signal $(\alpha^C{}_{WN}\hat{I}_{WN}; \alpha^C{}_{WS}\hat{I}_{WS})$ to the actuation means (46) in order to compensate for the disturbance $(T_N{}^w, T_S{}^w)$ placed on the satellite (10) from actuation of at least one solar wing (16, 17) associated with the satellite (10).

2. A system for compensating for the disturbance torque $(T_N{}^w, T_S{}^w)$ applied to an orbiting satellite (10) from the slewing of solar wings (16, 17) associated with the satellite (10) to track the sun (22), said system comprising:

sensor means (52) for measuring the satellite's attitude $(\Theta_P)$ relative to at least one predetermined satellite axis and providing an attitude measurement signal $(\Theta_P{}^m)$ in the at least one predetermined axis;

control means (44) for receiving the attitude measurement signal $(\Theta_P{}^m)$ and calculating satellite attitude compensation control signals $(T_P{}^C)$ in the at least one predetermined axis;

a solar wing compensation device (50), said solar wing compensation device (50) including inertia means (54, 56) for applying an estimated solar wing inertia signal $(\hat{I}_{WN}, \hat{I}_{WS})$ to an acceleration signal $(\alpha^C{}_{WN}, \alpha^C{}_{WS})$ being applied to the solar wing (16, 17) in order to derive an estimated solar wing disturbance control signal $(\alpha^C{}_{WN}\hat{I}_{WN}; \alpha^C{}_{WS}\hat{I}_{WS})$ in the at least one predetermined axis; and

actuation means (46) for actuating the satellite (10) in the at least one predetermined axis in response to the compensation control signals $(T_p{}^C)$ from the control means (44) and the solar wing disturbance signal $(\alpha^C{}_{WN}\hat{I}_{WN}; \alpha^C{}_{WS}\hat{I}_{WS})$ from the solar wing compensation device (50).

3. The apparatus according to claims 1 or claim 2 wherein the solar wing compensation device (50) includes multiplier means (54, 56) for multiplying an estimated solar wing inertia $(\hat{I}_{WN}, \hat{I}_{WS})$ to an acceleration signal $(\alpha^C{}_{WN}, \alpha^C{}_{WS})$ applied to the solar wing (16, 17) in order to derive the solar wing control signal $(\alpha^C{}_{WN}\hat{I}_{WN}; \alpha^C{}_{WS}\hat{I}_{WS})$.

4. The apparatus according to any of claims 1 - 3 wherein the solar wing compensation device (50) includes compensation means for compensating for two solar wings (16, 17) associated with the satellite (10).

5. The apparatus according to any of claims 1 - 4 wherein the sensor (52) is an inertia sensor (52) selected from the group consisting of an earth sensor, a star sensor, a sun sensor, a ground beacon sensor and a gyro, said inertia sensor (52) measuring the angle $(\Theta_P)$ of the satellite attitude relative to a predetermined desirable satellite attitude along the at least one predetermined axis and outputting a signal $(\Theta_P{}^m)$ representative of this at least one angle $(\Theta_P)$ to the control means (44).

6. The apparatus according to any of claims 1 - 5 further comprising summation means for summing together the control signal $(T_P{}^C)$ from the control means (44) with the solar wing signal $(\alpha^C{}_{WN}\hat{I}_{WN}; \alpha^C{}_{WS}\hat{I}_{WS})$ from the solar wing compensation device (50) and applying the sum to the actuation means (46).

7. The apparatus according to any of claims 1 - 6 wherein the solar wing compensation device (50) includes sampling means $(T_S)$ for sampling the solar wing rate $(\omega^C{}_{WN})$ at predetermined intervals (K) in order to derive an estimated solar wing disturbance as an average $(T^N{}_{avg})$ between the intervals (K).

8. A method of maintaining an orbiting satellite (10) in a predetermined satellite attitude against the disturbance $(T_N{}^w, T_S{}^w)$ from the slewing of at least one solar wing (16, 17) associated with the satellite (10), said method comprising the steps of:

measuring the angle $(\Theta_P)$ of the satellite's attitude relative to at least one predetermined axis;

applying the measured angle $(\Theta_P{}^m)$ of the at least one predetermined axis to a control system (44);

calculating compensating control torques $(T_P{}^C)$ in the at least one predetermined axis to correct the attitude of the satellite (10) in the at least one predetermined axis to a predetermined desirable satellite attitude position;

determining an estimated solar wing disturbance torque $(\alpha^C{}_{WN}\hat{I}_{WN}; \alpha^C{}_{WS}\hat{I}_{WS})$ being applied to the satellite (10) due to rotating the solar wing (16, 17) about its axis in order to track the sun (22);

applying the control torques $(T_P{}^C)$ to a satellite actuation device (46);

applying an estimated solar wing torque $(\alpha^C{}_{WN}\hat{I}_{WN}; \alpha^C{}_{WS}\hat{I}_{WS})$ derived from the estimated

solar wing disturbance ($\alpha^C_{WN}\hat{I}_{WN}$; $\alpha^C_{WS}\hat{I}_{WS}$) to the actuation device (46); and

actuating the satellite (10) in response to the control torques ($T_P{}^C$) and the estimated solar wing torque ($\alpha^C_{WN}\hat{I}_{WN}$; $\alpha^C_{WS}\hat{I}_{WS}$).

9. The method according to claim 8 wherein the step of determining an estimated solar wing disturbance torque (($\alpha^C_{WN}\hat{I}_{WN}$; $\alpha^C_{WS}\hat{I}_{WS}$) includes the steps of multiplying an acceleration signal ($\alpha^C_{WN}$, $\alpha^C_{WS}$) imparted to slew the solar wing (16, 17) and an estimated solar wing inertia ($\hat{I}_{WN}$, $\hat{I}_{WS}$) to derive the estimated solar wing torque ($\alpha^C_{WN}\hat{I}_{WN}$; $\alpha^C_{WS}\hat{I}_{WS}$).

10. The method according to claim 8 wherein the step of determining an estimated solar wing disturbance torque ($\alpha^C_{WN}\hat{I}_{WN}$; $\alpha^C_{WS}\hat{I}_{WS}$) includes the steps of applying an acceleration signal ($\omega^C_{WN}$) imparted to slew the solar wing at predetermined intervals (K) to a predetermined algorithm (60) in order to derive the estimated solar wing torque ($\alpha^C_{WN}\hat{I}_{WN}$; $\alpha^C_{WS}\hat{I}_{WS}$) as an average value ($T^N_{avg}$) between the intervals (K).

11. The method according to any of claims 8 - 10 wherein the step of measuring the angle ($\Theta_P$) of the satellite's attitude includes measuring the satellite's attitude by means of a sensor (52) selected from the group consisting of an earth sensor, a star sensor, a sun sensor, a ground beacon sensor, and a gyro.

Fig-1

16

10

18

12

14

24

YAW

20

EARTH

22

ROLL

SUN

17

PITCH

EP 0 544 241 A1

8

Fig-2

EP 0 544 241 A1

Fig-3

Block diagram:

- Box 32: NORTH SOLAR WING CONTROL SYSTEM → output $\omega_{WN}^C$ (NORTH WING RATE $C_{md}$) → switch $T_S$ → NORTH WING ACTUATOR (36) → $\omega_W^N$ → NORTH WING DYNAMICS (40) → $\theta_W^N$

- Box 60:
$$T_{AVG_K}^N = \frac{\widehat{I}_W^N}{T_S}\left(\omega_{WN_K}^C - \omega_{WN_{K-1}}^C\right)$$
OR
$$\frac{T_{AVG}^N}{\omega_{WN}^C} = \frac{\widehat{I}_W}{T_S} \cdot \frac{Z-1}{Z}$$
→ $T_{AVG}^N$

- Box 44: PITCH AXIS CONTROL SYSTEM → $T_P^C$ → switch $T_S$ → Σ

- Σ inputs: $T_{AVG}^N$, $T_{AVG}^S$; output $T_P^C + T_{AVG}^N + T_{AVG}^S$ → PITCH AXIS ACTUATOR (46) → SATELLITE PITCH AXIS DYNAMICS (48) → $\theta_P$

- FROM SOUTH WING → SATELLITE PITCH AXIS DYNAMICS

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 647 238 (KABUSHIKI KAISHA TOSHIBA) | 1-6,8-11 | B64G1/24 |
| A | * page 1, line 5 - page 3, line 29 * <br> * page 5, line 12 - page 13, line 5 * <br> * page 16, line 32 - page 18, line 35; figures 1-2,6 * | 7 | G05D1/08 |
| A | EP-A-0 319 120 (FORD AEROSPACE CO.) <br> * page 3, line 30 - page 4, line 7 * <br> * page 5, line 31 - line 46; figures 1,4 * | 1-2,8 | |
| A,P | WO-A-9 219 498 (MESSERSCHMITT-BOLKOW-BLOHM GMBH) <br> * page 7, line 12 - page 12, line 7 * <br> * page 15, line 3 - page 17, line 4 * <br> * page 18, line 16 - page 20, line 6; figures 3-5 * | 1-2,8 | |
| A,D | US-A-4 687 161 (PLESCIA ET AL.) <br> * column 1, line 52 - column 2, line 5 * <br> * column 4, line 9 - column 6, line 40; figures 1-5 * | 1-2,8 | TECHNICAL FIELDS SEARCHED (Int. Cl.5) <br><br> B64G <br> G05D |

The present search report has been drawn up for all claims

| Place of search | Date of completion of the search | Examiner |
|---|---|---|
| THE HAGUE | 11 MARCH 1993 | RIVERO C.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................
& : member of the same patent family, corresponding document

EPO FORM 1503 03.82 (P0401)